(19) Europäisches Patentamt
European Patent Office
Office européen des brevets

(11) **EP 4 260 033 B1**

(12) **EUROPEAN PATENT SPECIFICATION**

(45) Date of publication and mention
of the grant of the patent:
**18.02.2026 Bulletin 2026/08**

(21) Application number: **21836732.4**

(22) Date of filing: **10.12.2021**

(51) International Patent Classification (IPC):
*G01L 1/22* (2006.01)        *G01L 3/10* (2006.01)
*G01L 3/14* (2006.01)        *G01L 5/00* (2006.01)
*G01L 5/161* (2020.01)       *G01L 5/24* (2006.01)
*F16K 37/00* (2006.01)       *G01L 1/26* (2006.01)

(52) Cooperative Patent Classification (CPC):
**G01L 1/2206; F16K 37/0041; G01L 1/26;
G01L 3/1457; G01L 5/0061**

(86) International application number:
**PCT/US2021/062807**

(87) International publication number:
**WO 2022/125897 (16.06.2022 Gazette 2022/24)**

(54) **BRACKET TORQUE DEVICE**

KLAMMERDREHMOMENTVORRICHTUNG

DISPOSITIF DE COUPLE DE SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2020 US 202063123818 P
31.12.2020 US 202017139284**

(43) Date of publication of application:
**18.10.2023 Bulletin 2023/42**

(73) Proprietor: **Bray International, Inc.
Houston, TX 77041 (US)**

(72) Inventors:
• **KITCHENS, Michael**
  **Houston, TX 77041 (US)**
• **SAMARNEH, Joseph**
  **Houston, TX 77041 (US)**
• **MCCONNELL, Daniel**
  **Houston, TX 77041 (US)**

(74) Representative: **BSB Patentanwälte
Schütte & Engelen Partnerschaft mbB
Am Markt 10
59302 Oelde (DE)**

(56) References cited:
GB-A- 2 274 714        US-A- 5 743 133
US-A1- 2017 016 749

**Description**

BACKGROUND

Technical field: The subject matter generally relates to apparatus and techniques for observing and calculating torque for industrial process control systems, in particular for valves.

US 5,743,133 discloses a valve used in a nuclear power plant in which a strain gauge is used to detect both torque and thrust on a hollow cylinder. GB 2 274 714 A discloses a strain measuring device where a strain gauge is mounted on a cylindrical mounting stool. The output signal may be damped to remove transients. US 2017/0016749 A1 discloses an actuator bracket having a sensor. The sensor may be a strain gauge or an acoustic sensor to detect noises or vibrations.

Current commercially available devices of calculating the torque of a valve system involves torque cells or transducers as mounted on a cylindrical body (e.g. the torque cell or transducer is mounted on a round bar, or a tube). For these currently available configurations, the conversion from strain to torque is relatively simple and straightforward. The conversion from strain to torque relies on known equations using Diameter, Young's Modulus, Poisson's Ratio that can be applied to a round body for the conversion of micro-strain to torque. However, the measurement of strain on a non-cylindrical body or feature of a valve and subsequent conversion to a usable torque value is not currently available in the field of industrial process control systems. Accordingly there is a need for the ability to measure strain on a non-cylindrical body and accurately and reliably calculate the torque value from the measured strain values.

BRIEF SUMMARY

The embodiments disclosed herein relate to a bracket for a valve system, having an actuator side of the bracket, defining a first set of one or more holes; a valve side of the bracket, wherein the valve side is opposite the actuator side, and further wherein the valve side defines a second set of one or more holes; a wall (or walls) connecting the actuator side and the valve side; and a strain gauge mounted to the wall (or walls).

BRIEF DESCRIPTION OF THE DRAWINGS

The embodiments may be better understood, and numerous objects, features, and advantages made apparent to those skilled in the art by referencing the accompanying drawings. These drawings are used to illustrate only typical embodiments of this disclosure, and are not to be considered limiting of its scope, for the disclosure may admit to other equally effective embodiments. The figures are not necessarily to scale and certain features and certain views of the figures may be shown exaggerated in scale or in schematic in the interest of clarity and conciseness.

FIG. 1 depicts a front isometric view of an exemplary embodiment of a valve having a bracket with a strain gauge and an actuator mounted to the bracket.

FIG. 2 depicts an enlarged isometric view of an exemplary embodiment of a bracket with a strain gauge.

FIG. 3 depicts an enlarged isometric view of an alternative exemplary embodiment of a bracket having a recessed face with a strain gauge.

FIG. 4 depicts an enlarged isometric view of an alternative exemplary embodiment of a bracket with a strain gauge connection board.

FIG. 5 depicts an enlarged isometric view of an alternative exemplary embodiment of a bracket with a strain gauge control box enclosure.

FIG. 6 depicts an enlarged front view of an exemplary embodiment of a bracket with a strain gauge.

FIG. 7 depicts an isometric view of an alternative exemplary embodiment of a bracket with one or more strain gauges.

FIG. 8 depicts a schematic diagram of an exemplary embodiment of a microcontroller or microprocessor for a bracket with a strain gauge connection board.

FIG. 9 depicts an isometric view of an alternative exemplary embodiment of a bracket having a strain gauge.

FIG. 10 depicts an isometric view of an alternative exemplary embodiment of a bracket with a strain gauge control box enclosure.

FIG. 11 depicts a side view of an alternative exemplary embodiment of a bracket with a strain gauge.

FIG. 12 depicts a front or rear view of an alternative exemplary embodiment of a bracket with a strain gauge.

FIG. 13 depicts an isometric view of an alternative exemplary embodiment of a bracket having a strain gauge.

FIG. 14 depicts a side view of an alternative exemplary embodiment of a bracket having a strain gauge.

FIG. 15 depicts a front view of an alternative exemplary embodiment of a valve having a bracket with a strain gauge and an actuator mounted to the bracket.

FIG. 16 depicts a front exploded view of an alternative exemplary embodiment of the actuator, and microprocessor of a bracket with a strain gauge.

DETAILED DESCRIPTION OF THE EMBODIMENT(S) SHOWN

The description that follows includes exemplary apparatus, methods, techniques, and instruction sequences that embody techniques of the inventive subject matter. However, it is understood that the described embodiments may be practiced without these specific details.

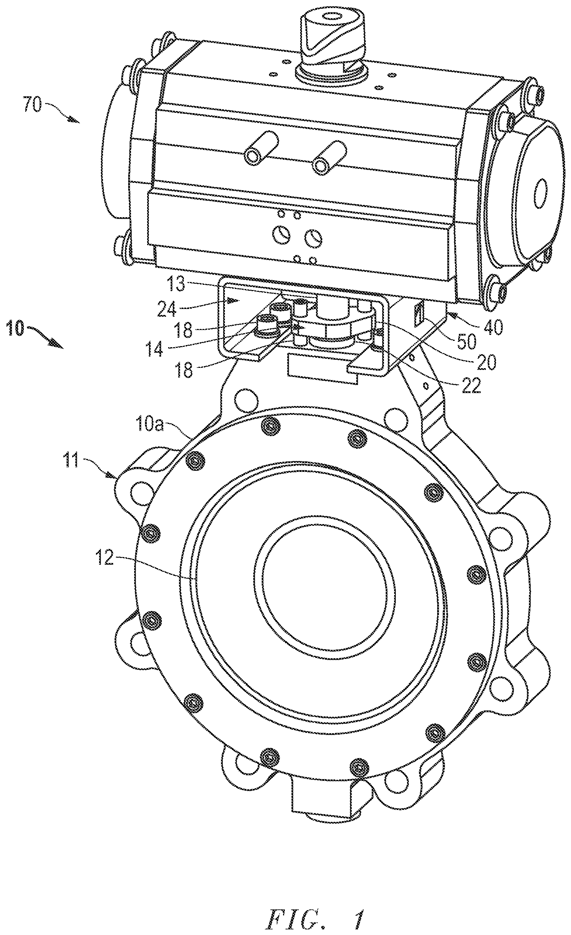

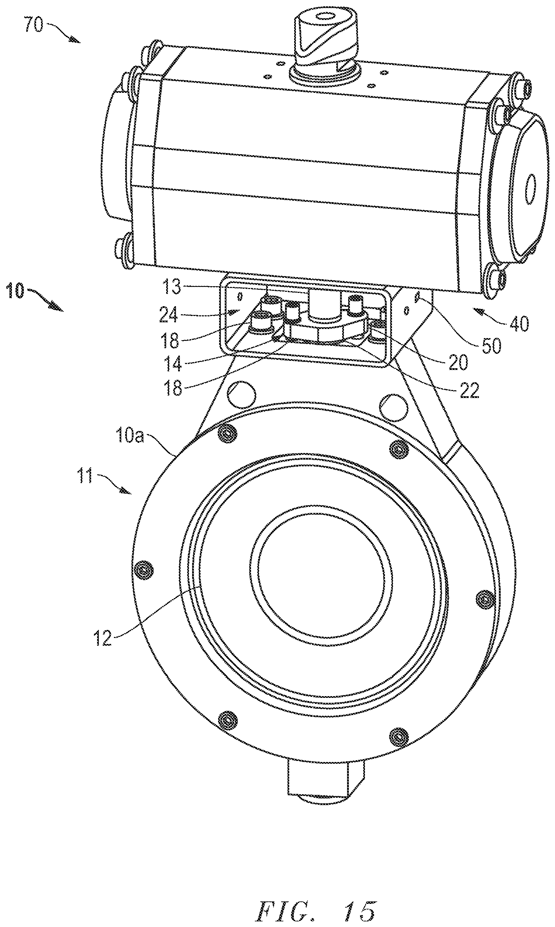

FIG. 1 depicts a front isometric view of an exemplary embodiment of a valve system 10 including a valve 10a having a mounting support, housing, coupler, or bracket 40 with a strain gauge 50, wherein the bracket 40 is a C-shaped bracket. FIG. 15 depicts an alternative exemplary embodiment of the valve system 10 having substantially similar features to the valve system 10 as shown in FIG. 1, but wherein the bracket 40 has a tube shape. The bracket 40 is mounted on top of the valve body 11 of the valve 10a and an actuator 70 is further mounted on top of the bracket 40, wherein the valve body 11 and actuator 70 are on opposite sides or ends of the bracket 40. The valve 10a may include a flow control element or obturator 12 set within a valve body 11. The flow control element, control element, or obturator 12 are the moving component(s) inside the valve 10a which serve to mechanically obstruct or control the flow of the fluid in pipes. The control element or obturator 12 may be any kind of flow control element or obturator, such as by way of example only, and not to be limited to, a disk/disc, a ball, a gate, and others. The valve 10a may control a media flow through the flow control element or obturator 12 with a valve stem 13 as actuated by the actuator 70. The valve stem 13 may be partially housed and accessible through the bracket 40.

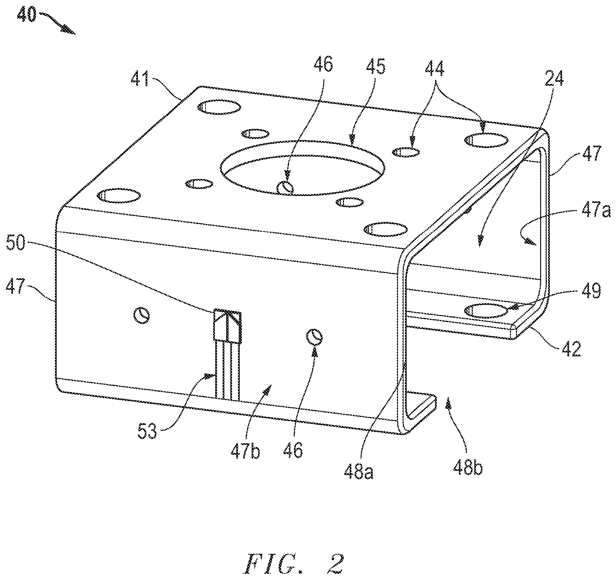

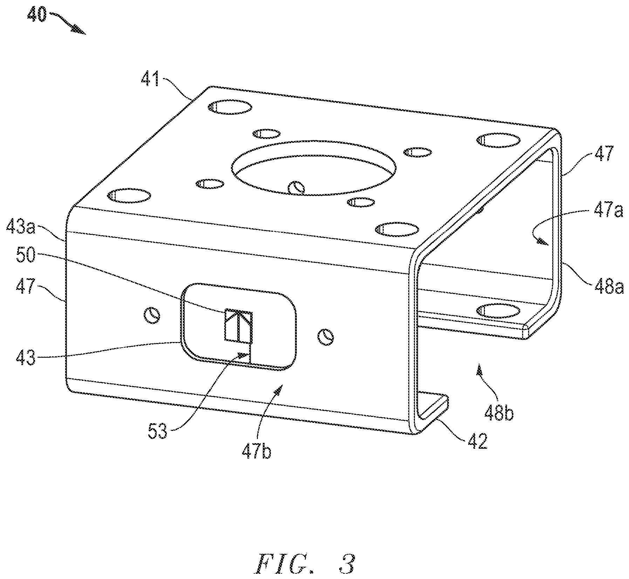

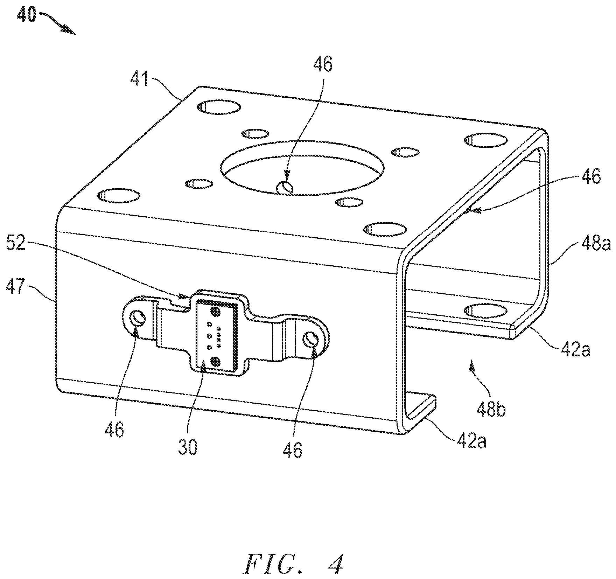

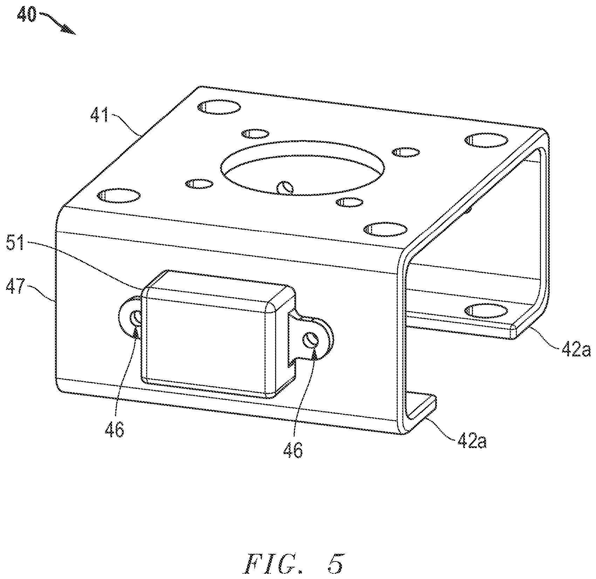

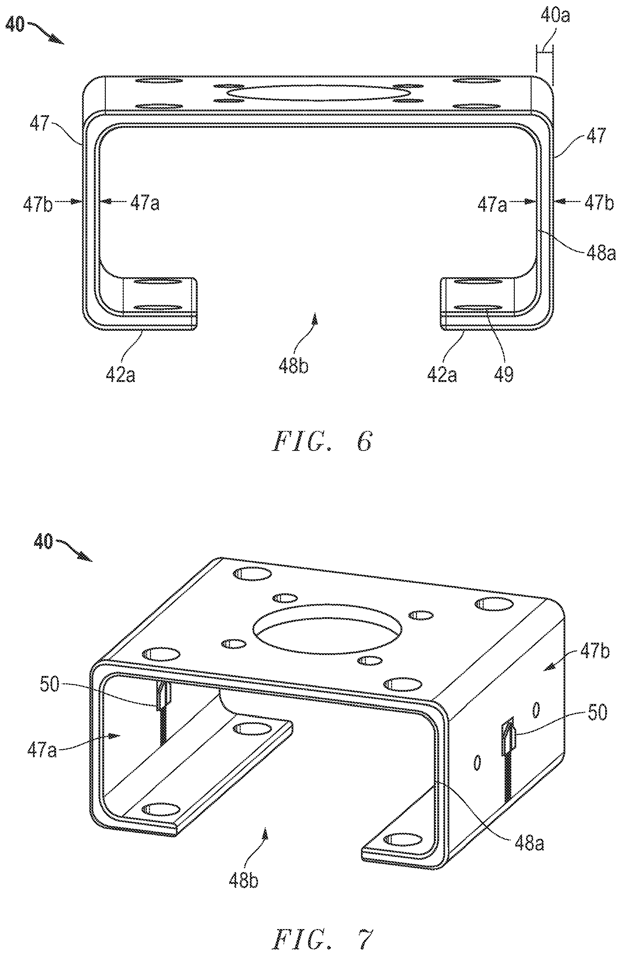

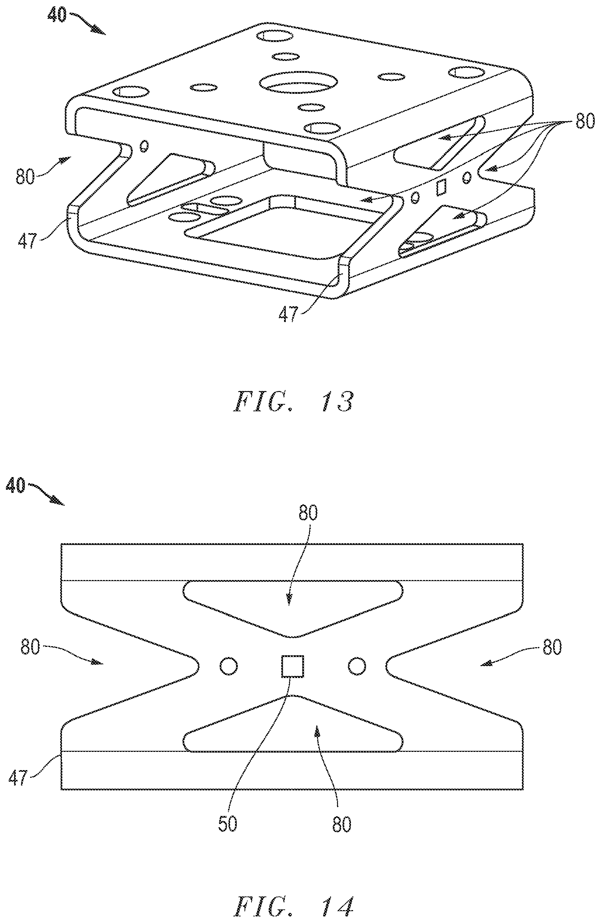

Enlarged views of the exemplary embodiments of the bracket 40 are depicted in FIGs. 2-7 and FIGs. 9-14. The mounting support or bracket 40 in FIGs. 1 and 2-7 may have a substantially C-shaped, C-channel, or open seam rectangle tube structure. The bracket 40 has a wall or arm 47 on each lateral side connecting a top side or panel 41 and a bottom side or panel 42. The top side 41 may also be referred to as the actuator side or panel 41, and the bottom side 42 may also be referred to as the valve side or panel 42. The top side or panel 41 may have its mounting surface (i.e. abutting the actuator 70 when installed) in a plane parallel to the plane of the mounting surface (i.e. abutting the valve body 11 or bonnet when installed) of the bottom side or panel 42. The bottom side or panel 42 may be flanges, lips or extensions 42a adjacent and connected to the bottom of each lateral wall 47, and extending towards the interior of the bracket 40. The walls 47 of the bracket 40 define openings 48a at the front and rear of the bracket 40, and an opening or slot 48b at the bottom side 42. The bottom bracket opening or slot 48b may be defined between the two flanges or extensions 42a. Each lateral wall 47 of the bracket 40 further includes an interior or inside wall surface 47a and an exterior or outside wall surface 47b, as is best shown in FIG. 6. The wall bracket thickness 40a may be defined as the distance between the interior wall surface 47a and the exterior wall surface 47b. In alternative exemplary embodiments, the wall 47 may optionally define a milled face, recess, recessed face or notch 43 on one or more of the walls 47, wherein the recess 43 has a thinner, decreased, or reduced thickness 40a than the remainder of the wall(s) 47. In other exemplary embodiments the thickness could be increased beyond the thickness of the remainder of the wall(s) 47. The recess 43 may optimize the strain response or measured strain or stress for any given combination of valve/actuator system or combination 10. The presence of the recess 43 allows for adjustability and versatility compared with conventional "torque cell" designs in which entire valve/actuator combinations or valve systems 10 would require rework or replacement to change the strain response. Further, Finite Element Analysis (hereinafter, also "FEA") may be used to calculate or determine a desired bracket thickness 40a for any valve/actuator combination 10, which would allow the improved bracket 40 to be easily scalable to small and large sizes for different types of valve systems 10. The walls or sides 47 may be alternatively or additionally modified to provide an increased strain response for increased efficacy in measuring the strain. By way of example only, and as shown in FIGs. 13-14, the walls 47 may have a pattern of openings or holes 80 removed, cut-out from, or otherwise defined through one or both walls or sides 47 to improve the strain response or increase sensitivity of the strain gauge 50. By way of example only, an X-patterned wall 47 is depicted in the exemplary embodiment of FIGs 13-14 defining the openings 80. In certain embodiments the openings 80 may be defined through entirety of the thickness 40a of the walls 47. The openings 80 may be a single opening 80, or alternatively, could be multiple openings 80 in a pattern. In further exemplary embodiments, the walls 47 may have a combination of different modifications to provide the desired amount of strain response (such as, by way of example, a recess 43 in connection with the defined patterns or cutouts 80). While the pattern of openings 80 as shown in FIGs. 13-14 are four triangular openings or holes as defined through the side 47, wherein the strain gauge 50 is mounted on the remaining wall 47 material between the openings 80, any number and kind of shape or pattern of openings 80, (such as one or more circles, rectangles, squares, or irregular shape) as defined through, or cut out, or removed from the material of wall 47 is encompassed by this disclosure.

A gland ring 22 may surround the stem 13 and may also be housed and located at least partially within the interior or inside of the bracket 40. The interior or inside of the bracket 40 may be the area as defined within the walls 47, actuator side/end 41, and the valve side/end 42. A gland retainer 20 is mounted above the gland ring 22. The gland retainer 20 may be secured to the valve body 11 (as illustrated in FIG. 1) via one or more fasteners 18. In the exemplary embodiments as depicted, the interior area or inside 24 of the bracket 40, housing the gland ring 22, gland retainer 20, stem 13 and fasteners 18, as parts of the stem packing 14, may be exposed and accessible to an operator of the valve system 10 via the 40 front and rear openings 48a. The bracket 40 may thus allow easy access to the operator for adjusting, manipulating, or removal of the critical valve components like the stem packing 14 (including the gland retainer 20) which requires intermittent servicing, fasteners 18, strain gauges 50, strain gauge control box enclosure 51 and strain gauge connection board 52. Conventionally available valve systems may completely enclose this portion of the valve 10a, especially regarding the stem packing 14, which can require removal during servicing and thus can be difficult and time consuming.

In further alternative exemplary embodiments, the bracket 40 may be fully enclosed, without openings 48a, to prevent water and dirt ingress, or fully enclosed with other means of access (by way of example only, a door panel connected to the mounting support or bracket 40 which may be opened or closed). The stem 13 may extend through the top side or end 41 of the bracket 40 via a valve stem hole 45 defined through the top side 41, and through the bottom side or end 42 of the bracket 40 via the bracket slot or opening 48b. The gland ring 22, in certain exemplary embodiments, may be inserted or fitted within the bottom bracket slot or opening 48b. The actuator 70 may engage the stem 13 at the free end of the stem 13 (opposite where the stem 13 is connected to the flow element or obturator 12), above the bracket 40, and actuate or control the flow element or obturator 12 between an open and a closed position.

Further, one or more actuator side or actuator connection holes or ports 44 are drilled or defined in a pattern through the top side 41 of the bracket 40 to allow or enable the fastening or mounting of the actuator 70 to the bracket 40, via fasteners 18. Similarly, one or more valve side holes or ports 49 are drilled or defined in a pattern through the bottom side 42 (e.g. the extensions 42a) of the bracket 40 to allow or enable the fastening, mounting, or direct coupling of the valve body 11 to the bracket 40 via fasteners 18. Fasteners 18 as described within this disclosure may be any type of fastening, connecting, or mounting mechanism or device as is known to one of ordinary skill in the art.

In the exemplary embodiments as depicted in FIGs. 1-2 and 7, the strain gauge 50 may be mounted or bonded onto a bracket wall 47, wherein the bracket wall 47 has a uniform thickness 40a. In alternative exemplary embodiments where the bracket 40 has a recess 43, the strain gauge 50 may instead be mounted or bonded onto the recess 43, wherein the recess 43 has a thinner or reduced bracket or wall thickness 40a (as compared with the thickness 40a of the unrecessed portion 43a of the wall 47, or the wall area 43a not part of the recess 43). There may be more than one recess 43 on a bracket 40, including a recess 43 on both walls 47; or alternatively a recess 43 on the interior surface 47a and another recess 43 on the exterior surface 47b of the same wall 47 - many combinations are possible and considered within the scope of this disclosure.

The strain gauge 50 may detect or sense stress or strain on the wall surfaces 47 (or the recess 43 of a wall 47) during operation of the valve system 10. In particular, the strain gauges 50 may detect the stress or strain as experienced between the valve body 11 and the actuator 70. The strain gauge 50 may be a shear, linear, rosette, or any other type of strain gauge as known to one of ordinary skill in the art. The strain gauge 50 may be a commercially available metal foil type of strain gauge. Moreover, more than one strain gauge 50 may be mounted onto the bracket 40, and strain gauges 50 may be mounted on either or both of the interior surface 47a or the exterior surface 47b of the walls 47 (see e.g. FIG. 7, having a strain gauge 50 on the interior surface 47a of a first wall 47, and a second strain gauge 50 on the exterior surface 47b of a second wall 47). By way of example only, in a first embodiment, a single strain gauge 50 may be mounted on an exterior surface 47b of the wall 47. In an alternative second exemplary embodiment, a first strain gauge 50 may be mounted to a first exterior surface 47b of a first wall 47, and a second strain gauge 50 may be mounted to a second exterior surface 47b of a second or opposite wall 47. According to the claimed invention, in a third alternative exemplary embodiment, a first strain gauge 50 is mounted on the exterior surface 47b of a first wall 47, and a second strain gauge 50 is mounted on the interior surface 47a of the of the first wall 47. Any of the strain gauges 50 as discussed within the disclosure may optionally be mounted onto a recess 43 of the walls 47. The strain gauges 50 may be configured in a full, half, or quarter (Wheatstone) bridge configuration. Additionally, multiple Wheatstone bridges may be utilized to optimize response and functionality of the strain gauges 50.

The strain gauges 50 may include communication mechanisms, connectors or leads 53 which connect to a strain gauge connection board 52 and/or a microprocessing unit 30. In certain exemplary embodiments, the strain gauge connection board 52 may be a flex circuit. As can be best seen in FIGs. 2-3 and 7, the strain gauges 50 may have one or more leads or connectors 53 which allow the communication of data 60 to and from a computing device, microcontroller or microprocessor 30. In further alternative exemplary embodiments, the communication mechanisms 53 may be wireless communication devices which may be housed in the microprocessor 30. The computing device or microprocessing unit 30 may be the same as or connected to the strain gauge connection board 52. The strain gauge connection board 52 may be mounted on top of each of the strain gauges 50, and further secured to the wall 47. Moreover, the strain gauge 50 and connection board 52 may be further housed or enclosed in a control box enclosure 51. The connection board 52 and control box enclosure 51 may be secured to the wall 47 of the bracket 40 via fasteners 18 inserted into mounting holes 46 as defined in said walls 47. The control box enclosure 51 may provide certain water ingress or dust ingress protection capabilities to protect the connection board 52 and strain gauge 50 housed within from water or dust damage. By way of example only, the control box enclosure 51 may provide IP67 capabilities, or ingress protection from harmful dust and protection from immersion in water with a depth of up to 1 meter for a duration up to 30 minutes.

The strain, micro-strain or stress data or signal 60 as sensed, observed or measured from the strain gauge 50 on the wall(s) 47 corresponds to torque force or strain acting upon the valve system 10 and the bracket 40, such as during actuation or operation of the control element or obturator 12 via the actuator 70. The raw observed data 60 requires conversion, calculation or modification to correspond the raw data 60 to the related torque value, amount, or data 60a. The data 60, 60a may be continuously monitored by and stored within microcontroller 30 as the valve system 10 operates. The data 60 and calculated/converted data 60a regarding the sensed conditions, as monitored and tracked over time, may indicate and alert the operator as to potential problems of the valve system 10, such as excessive torque amount, breakdown of components, valve sealing degradation, or actuator performance issues. The C-shaped bracket 40 and the presence of various actuator side holes 44, valve side holes 49 and mounting holes 46 results in a unique and complex geometry without a currently known or available method of converting the measured or sensed strain 60 from the strain gauges 50 into understandable or usable torque values 60a to determine acceptable levels of strain, stress, and torque on the valve system 10. As the present disclosure utilizes a bracket 40 having a non-cylindrical, asymmetric body on which a strain gauge 50 is mounted, this requires a nonconventional method of converting micro-strain data 60 into torque values or data 60a.

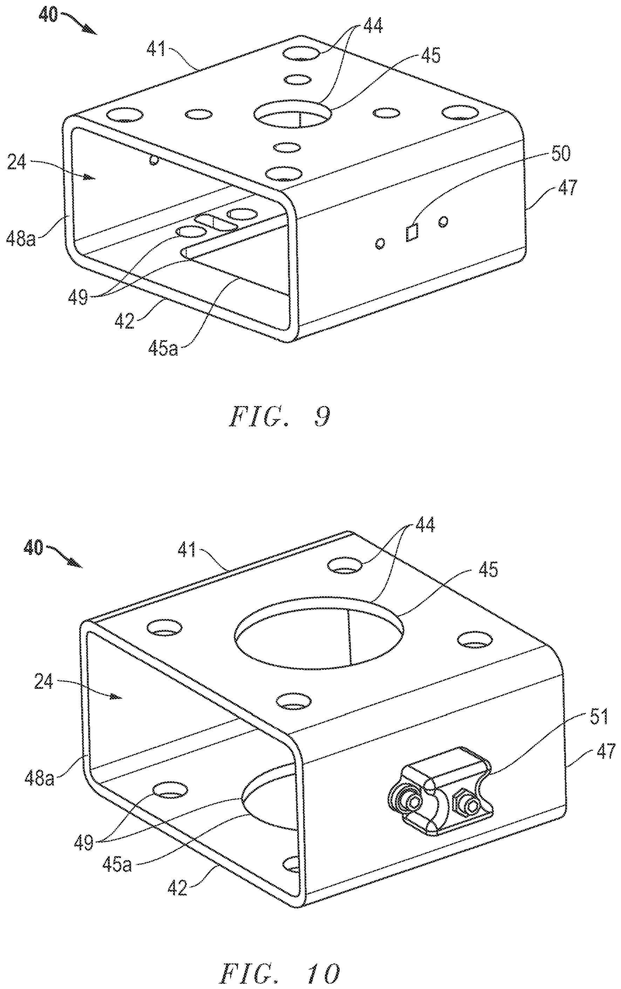

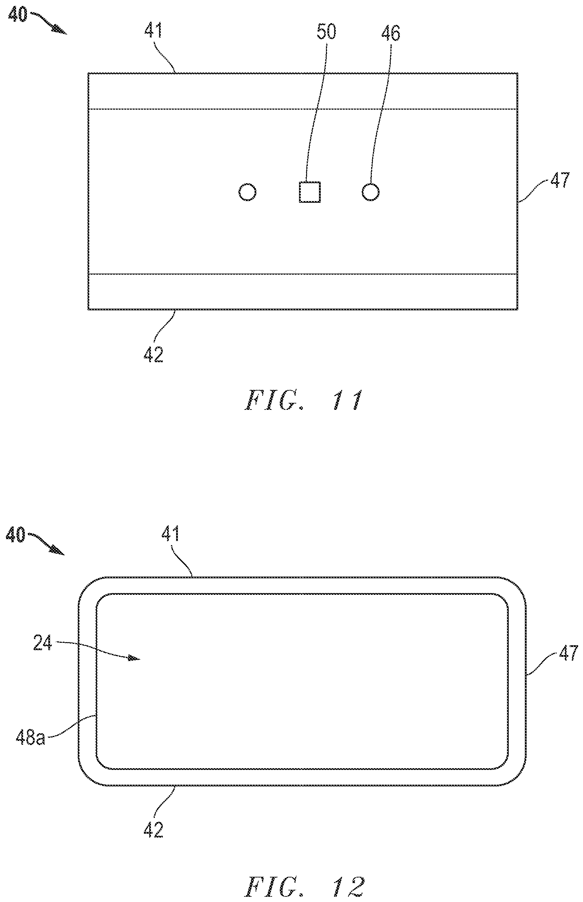

The bracket 40, while depicted as having a C-shape in FIGs. 1-7, may instead have other shapes such as and not limited to: a closed tube shape, a parallelogram shape, a quadrilateral shape, a circular shape, a shape having three connected planar surfaces, a trapezoid shape, or any other geometry as known to one of ordinary skill in the art. In the further exemplary embodiments as depicted in FIGs. 9-15, the bracket 40 has a tube or a substantial tube shape, wherein the bottom or valve side 42 is a panel or surface which connects the two sides or walls 47; and wherein the top or actuator side 41 also connects the two sides or walls 47. The depiction of this embodiment as shown in FIG. 12 demonstrates that the bracket 40 has a substantially rectangular shape or appearance at a front or rear view. As shown in FIG. 9, the valve side 42 includes a set of openings, ports, or holes 49 which have a distinct or different pattern than the set of openings 44 on the actuator or top side 41. However, as illustrated in FIG. 10, the set of openings 49 on the valve or bottom side 42 may be a substantially identical pattern to the set of openings 44 on the actuator or top side 41. Like the bracket bottom opening 48b of FIGs. 1-7, the set of openings 49 on the bottom 42 includes valve stem opening 45a that allows the stem to travel through and allows the bracket 40 to be connected, mounted, fastened or directly coupled to the valve body 11. The set of openings 44 on the top side 41 provides a valve stem opening 45 similar as described for the FIGs. 1-7. The tube shape of the bracket 40 in FIGs. 9-15 also has front and rear side openings 48a to allow access to the interior 24 of the bracket 40 for servicing the valve 10a. The description as provided herein for the strain gauge 50 in the embodiments of FIGs. 1-7 are applicable to the embodiments as shown in the FIGs. 9-15.

A first proposed approach would be to physically apply a known torque value (such as, by way of example, using an output digital torque wrench) to the device or valve system 10, measure the strain or micro-strain data 60 with the strain gauge 50, repeat for various different torque levels or values, record the data to the connection board/microcontroller 52 and determine or map the relationship between micro-strain data 60 and the known torque. Such process may produce a relationship having a linear equation in the following form:

$$y = mx + b,$$

or alternatively: (Torque) = ($m$)(strain) + ($b$),
wherein y is the calculated and sought after torque value 60a; x is the strain data measurement 60 as obtained from the strain gauge 50; and the variables m and b are numerical values which are experimentally determined from physical testing of each device or valve system 10. The equation, including the variables $m$ and $b,$ may be stored in the microcontroller 52, for converting the raw sensed data 60 to torque values 60a, and storing same, as the strain gauge 50 measures/senses the conditions of the valve system 10. In alternative exemplary embodiments, a polynomial curve fit may be used instead to depict the relationship between the strain data 60 and the known torque, and subsequently used to convert future raw data 60 to calculated torque values 60a.

Alternatively a formula or equation may be developed to provide the relationship between the measured strain or micro-strain data 60 and the torque 60a as based on various dimensions and material properties of the bracket 40, so as to be able to convert the raw data 60 to torque 60a. This may include dimensional properties or the geometry of the bracket 40 including the length, width, height, thickness 40a at the strain gauge 50, strain gauge 50 or bracket 40 orientation, number of openings or holes, and/or bolt or fastener 18 circle or hole diameter(s). The calculation may also take into account the mechanical properties including Young's modulus, Poisson's ratio, amongst others. While equations may already exist for simple shapes, the same cannot be said for a bracket 40 with complex geometry (such as having multiple openings of different sizes, including front and rear side openings 48a, drill patterns including holes 44, 45, 45a, 46, and 49, and varying bracket thicknesses 40a). By way of example only, but not limited to, further geometric dimensions and features like the mounting hole (e.g. 44, 45, 45a, 46, and 49) diameter, number of holes, and hole(s) orientation may be incorporated into the equation.

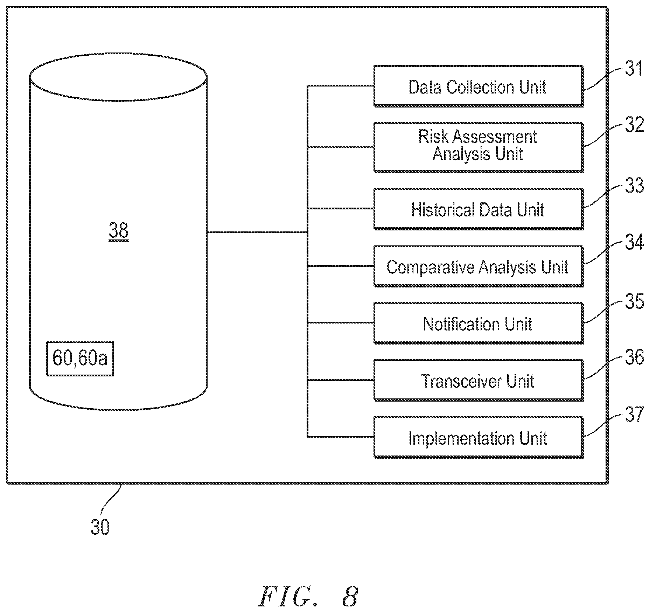

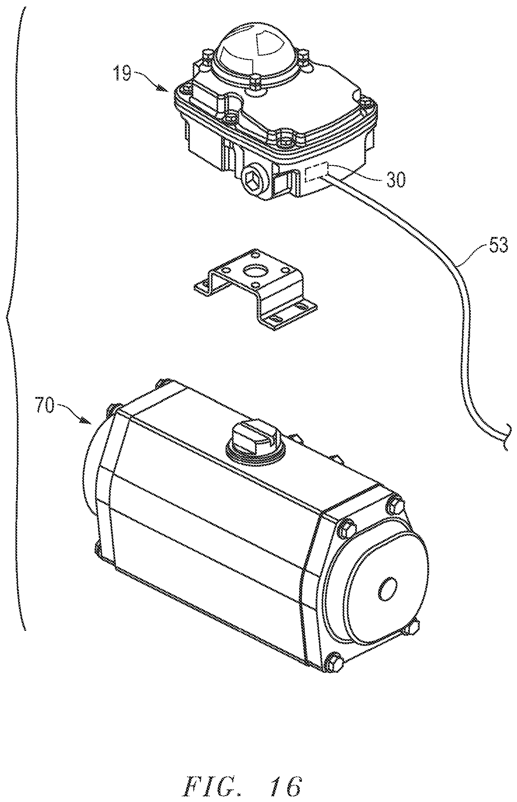

The data or signals 60 may be further processed, converted and/or analyzed by the microprocessor or computing unit 30 to provide the corresponding torque values 60a of valve system 10, as further described for FIG. 8. FIG. 8 depicts a schematic diagram of an exemplary embodiment of a microcontroller or microprocessor 30 for the valve 10. The microprocessor, microcontroller or computing unit 30 may have components including, but not limited to, a storage device 38, a data collection unit 31, a risk assessment or analysis unit 32, a historical data unit 33, a comparative analysis unit 34, a notification or alarm unit 35, and a transceiver unit 36. Generally, any description or disclosure regarding analysis and processing based on the strain gauge 50 retrieved/observed data, measurements or metrics 60 that is described as performed by the microprocessor 30 may also be performed by remotely or within a computing unit of the actuator of the valve system 10. The microprocessor 30, as depicted may be located within the control box enclosure 51, as a part of the strain gauge connection board 52 connected to the bracket 40. In alternative exemplary embodiments, the microprocessor 30, may be located separately from the valve system 10 and/or the bracket 40, as connected via cable or wire connection 53. In further alternative exemplary embodiments, the microprocessor 30 may be located on or in the body 11 of the valve 10a, on or in the actuator 70 of valve 10a, on or in a valve position indicator or a valve status monitor (VSM) 19 of the valve 10a (e.g., as schematically represented in FIG. 16), or another location external or remote to the bracket 40. The microprocessor 30 may also be wireless and receiving and transmitting data 60,60a to and from valve 10 and the strain gauge 50 without leads or connectors 53.

The microprocessor 30 and its components are generally implemented as electronic circuitry and processor-based computational components controlled by computer instructions stored in physical data storage components 38, including various types of electronic memory and/or mass-storage devices. It should be noted, at the onset, that computer instructions stored in physical data storage devices 38 and executed within processors or microcontrollers 30 comprise the control components of a wide variety of modern devices, machines, and systems, and are as tangible, physical, and real as any other component of a device, machine, or system. Occasionally, statements are encountered that suggest that computer-instruction-implemented control logic is "merely software" or something abstract and less tangible than physical machine components. Those familiar with modern science and technology understand that this is not the case. Computer instructions executed by processors must be physical entities stored in physical devices. Otherwise, the processors would not be able to access and execute the instructions. The term "software" can be applied to a symbolic representation of a program or routine, such as a printout or displayed list of programming-language statements, but such symbolic representations of computer programs are not executed by processors. Instead, processors fetch and execute computer instructions stored in physical states within physical data storage devices 38. Similarly, computer-readable media are physical data storage media 38, such as disks, memories, and mass-storage devices that store data in a tangible, physical form that can be subsequently retrieved from the physical data storage media 38. Moreover, the physical data storage media 38 may optionally be integral with the microprocessor 30.

The microprocessor 30 may access and use a variety of different types of stored or received information, signals, feedback, data, metrics, measurements or inputs 60, including, user/operator input, in order to generate output controls or commands that may trigger or change processes of the microprocessor 30 or the valve 10a, or otherwise transmit signals and data 60, 60a. Such changed processes may include visual and audible alerts or alarms to the operator of the process system, amongst others. The data 60, 60a may be collected and analyzed both singularly and collectively to provide warnings and alerts (real-time and in a predictive manner), determine faults, predicted faults, comparison to base line readings, and others. The computations may be distributed between the microprocessors 30 and other computing units or electronics within the actuator 70, valve 10a or remotely. Received/measured variables, data, measurements or metrics 60,60a, or input/stored variables, metrics, information or data 60,60a, whether received to the microprocessor 30 by user-input or feedback from any of the strain gauges 50, includes at least the sensed or threshold/limit stress, strain or micro-strain data 60, calculated or derived torque values 60a as well as other sensors that may be monitoring aspects of the valve system 10, including the valve 10a. Additional information used by the microprocessor 30 in its algorithms may include one or more stored control schedules, algorithms, immediate control inputs received through a control or display interface, and data, commands, commissioning, and other information received from other processing systems (including the data communication between other computing units), remote data-processing systems, including cloud-based data-processing systems (not illustrated) and may further include calculations or analysis of data 60 and 60a. Further, in alternative exemplary embodiments, the microprocessor 30 may monitor and coordinate data feedback and/or input 60,60a for the valve 10 or to alert an operator of maintenance or repair needs as based on the measurements/metrics, calculated values, or saved/stored data 60,60a for the valve system 10. Analog and digital interfaces of the microcontroller 30 may process the strain gauge data 60 and torque data 60a and perform real-time analysis of the collected data 60,60a. The microprocessor 30 can extract and deduce from the raw real-time sensor data 60 information or predictions regarding or calculated/converted data 60a. By way of example only, the microprocessor 30 may monitor and record the data 60,60a over several periods of time into the physical data storage component 38, and alert the operator when the sensed data or metric 60,60a exceeds a stored desired data value or set of parameters, range or threshold for the corresponding sensed data or calculated values 60,60a. This history and data 60,60a stored by the physical data storage component 38 may be further used to troubleshoot, maintain, and repair the components (such as the stem 13, strain gauge 50, bracket 40, gland retainer 20, gland ring 22 or fasteners 18, amongst others) of the valve system 10 by the operator or manufacturer of the system. The microprocessor 30 may optionally also provide a LED, graphic, display or analog interface (including a digital or analog interface or alarm system) that allows users/operators to easily input controls and may also provide or transmit output, data, signals and other information to remote entities, other microcontrollers, and to users through an information-output interface. The interface system may be an actuator mounted electronics having the ability to display information and inturn communicate further information to a process controller or other instrumentation connected to a network for actuator, including, but not limited to, cloud-based network and storage. Digital communication may allow the electronics or computing units within the actuator to directly communicate with the microprocessor unit 30. In this manner, the microprocessor 30 may act as a mechanism to sense or receive feedback for adjusting and correcting the valve 10 system(s).

Embodiments of the technology may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments of the disclosed subject matter may take the form of a computer program product embodied in any tangible medium of expression having computer usable program code embodied in the medium. The described embodiments may be provided as a computer program product, or software, that may include a machine-readable medium having stored thereon instructions, which may be used to program a computer system (or other electronic device(s)) to perform a process according to embodiments, whether presently described or not, since every conceivable variation is not enumerated herein. A machine readable medium includes any mechanism for storing or transmitting information in a form (e.g., software, processing application) readable by a machine (e.g., a computer). The machine-readable medium may include, but is not limited to, magnetic storage medium; optical storage medium; magneto-optical storage medium; read only memory; random access memory; erasable programmable memory; flash memory; or other types of medium suitable for storing electronic instructions. In addition, the various embodiments may be embodied in an electrical, optical, acoustical, or other form of propagated signal (e.g., carrier waves, infrared signals, digital signals, etc.), or wire line, wireless, or other communications/telemetry medium.

Computer program code for carrying out operations of the embodiments may be written in any combination of one or more programming languages. The program code may execute entirely on a user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN), a personal area network (PAN), or a wide area network (WAN), or the connection may be made to an external computer (for example, through the Internet using an Internet Service Provider).

The storage device 38 may be any suitable storage device for storing data. The data collection unit 31 may collect, gather, manipulate, and/or categorize the data 60, 60a about the valve system 10. If using multiple strain gauges 50, each strain gauge 50 may contribute metrics or data 60, 60a which lead to a partial view of the underlying valve system 10 condition regarding the torque 60a experienced by the valve system 10. When combining the metrics 60,60a of a group of strain gauges 50 using real-time analytical techniques, an accurate evaluation of the valve 10a and actuator 70 or valve system 10 condition may be obtained. The data collection unit 31 may manipulate the collected data 60,60a into a format that allows the operator and/or the microprocessor 30 to take appropriate action during the operations. The risk assessment or analysis unit 32 may receive the categorized data 60,60a from the data collection unit 31 in order to determine if there is any present or future risk likely at the valve system 10 and may make predictions not limited to remaining valve system 10 life, remaining actuator 70 life, and potential trend of torque values 60a. The risk may be based on real time events that are taking place in the operations and/or based on predictive events that are likely to occur. The risk assessment or analysis unit 33 may classify the risks for the microprocessor 30 and/or the operator (such as whether to create an alert or alarm). By way of example only, the operator can input a threshold limit or range of the strain or stress sensed by the strain gauge(s) 50 (or a threshold limit or range of the torque values 60a, i.e. a threshold torque value), which, if the sensed metrics 60,60a are above the input or desired threshold, can be identified by the microprocessor 30 via the risk assessment analysis unit 32 or other components of the microprocessor 30 (such as the comparative analysis unit 34) and optionally issue an alarm via notification unit 35.

The historical data unit 33 may categorize the historical data, measurements, metrics or calculated values 60,60a collected by the data collection unit 31. The comparative analysis unit 34 may compare the data, measurements or metrics 60,60a collected by the data collection unit 31, the classified risks, and/or the historical data 60,60a in order to determine a course of action for the operator and/or microprocessor 30. The comparative analysis unit 34 may further determine if the sensed metrics, data or measurements 60,60a is within a predetermined set of parameter values as previously input into the microprocessor 30. The valve 10a parameters for the strain gauge 50, may be any suitable parameters set by the manufacturer, operator, the client, or any other suitable source or algorithm. The comparative analysis unit 34 may make a determination of how serious the risk is based on the data 60,60a sensed, collected and/or calculated. The comparative analysis unit 34 may relay information to the notification unit 35 so that the notification unit 35 may alert the operator and/or take action. The notification unit 35 may alert the operator or microprocessor 30 of the real time condition, and/or a predicted condition about the valve system 10. The notification unit 35 may include visual display interface(s), audible sounds or alarms, or automated response, and/or a combination thereof. The transceiver unit, transmitter and/or communication device 36 may be any suitable device configured to communicate, send and/or receive data to the microprocessor 30 (such as, by way of example, in certain exemplary embodiments, wires or cables 53 or wirelessly). The transceiver unit or communication device 36 may be located in the microprocessor 30, control box enclosure 51, or remotely at a separate location. The transceiver unit or communication device 36 may enable the microprocessor 30 to communicate with the strain gauge 50 or further computing units 30 outside of the valve system 10. The implementation unit 37 may be configured create and execute an implementation plan for remediation of the valve system 10 (visual and audible alerts or alarms to the operator of the process system, amongst others). In another example, the operator and/or the microprocessor 30 may update, determine or provide predictions as to the valve system 10 parameters, and/or data as operations are being performed. The operator and/or the microprocessor 30 could notify or update the historical data unit 33 of any conditions, or parameters, that need to be compared in the future. The data 60,60a created by the disclosed valve system 10 and microprocessor or computing unit 30 and the subsequent calculations are utilized to provide valve 10a health monitoring services to end-users which includes and is not limited to: visualizations of the data 60,60a and analytics on a web, online, or remote platform; alarm notifications that recommend the maintenance actions that should be performed based on the analytics of the valve 10a performance; and further the analytics as provided by the valve system 10 and microprocessor 30 enable efficient repair service for the valve system 10 by identifying the specific maintenance that is required to prevent unplanned downtime and achieve normal operations (by way of example, maintenance for critical valve components like the stem packing 14 including the gland retainer 20). The monitoring, visualization of and notifications for maintenance or repair as based on the data 60,60a may be stored, tracked, and analyzed over a period of time.

As depicted, the exemplary embodiments of the bracket 40 may include only or merely a bracket 40 and a strain gauge 50. An alternative exemplary embodiment of the bracket 40 further includes a microprocessor or computing unit 30, either in or on the bracket 40, or in a separate location connected by wires 53 or communicating with the strain gauge 50 wirelessly. Further alternative exemplary embodiments of the bracket 40 may also include a communication device 36, which may communicate to components of the valve system 10 and/or components external to the valve system 10 via wires 53 or wirelessly, and may be located in the enclosure 51 with the microprocessor 30, or located in separately from the valve 10a. A strain gauge connection board 52 is optional to include with any of these bracket 40 embodiments as discussed herein.

While butterfly valves have been illustrated as exemplary embodiments, any type of industrial, control or process valve may be implemented as the valve apparatus or system 10.

While the exemplary embodiments are described with reference to various implementations and exploitations, it will be understood that these exemplary embodiments are illustrative and that the scope of the inventive subject matter is defined by the claims. Many variations, modifications, additions and improvements are possible.

Plural instances may be provided for components, operations or structures described herein as a single instance. In general, structures and functionality presented as separate components in the exemplary configurations may be implemented as a combined structure or component. Similarly, structures and functionality presented as a single component may be implemented as separate components.

**Claims**

1.  A bracket (40) for a valve system (10), comprising

    an actuator side (41) of the bracket (40), defining a first set (44) of one or more holes;
    a valve side (42) of the bracket (40), wherein the valve side (42) is opposite the actuator side (41), and further wherein the valve side (42) defines a second set (49) of one or more holes;

a wall (47) connecting the actuator side (41) and the valve side (42);

a first and a second strain gauge (50) mounted to the wall (47), wherein the strain gauges (50) are configured to determine a torque between the actuator side (41) and the valve side (42), the wall (47) comprises an exterior wall surface (47b) and an interior wall surface (47a), **characterized in that**

the first strain gauge (50) is mounted to the exterior wall surface (47b) and the second strain gauge (50) is mounted to the interior wall surface (47a).

2. The bracket (40) according to claim 1, wherein the wall (47) further defines a recess (43) having a reduced thickness (40a) relative to an unrecessed portion (43a) of the wall (47); and wherein the strain gauge (50) is further mounted onto the recess (43) of the wall (47).

3. The bracket (40) according to claim 1, further comprising a pattern of openings (80) defined through the wall (47), wherein the pattern of openings (80) are configured to increase a strain response of the strain gauge (50).

4. The bracket (40) according to claim 1, further comprising a control box enclosure (51) housing the strain gauge (50), wherein the control box enclosure (51) protects against water and dust ingress.

5. The bracket (40) according to claim 1, wherein the bracket (40) defines a front side opening (48a) and a rear side opening (48a), wherein both the front side opening (48a) and the rear side opening (48a) provide access to an interior area of the bracket (40).

6. The bracket (40) according to claim 1, wherein the strain gauge (50) is connected to a strain gauge connection board (52).

7. The bracket (40) according to claim 1, wherein the bracket (40) is a C-shaped bracket or wherein the bracket (40) is a tube shaped bracket.

8. A valve system (10) for monitoring torque, comprising

a valve body (11) housing an obturator (12) of the valve body (11);
an actuator (70) configured for actuating the obturator (12) for the valve body (11);
a bracket (40) according to any of claims 1-7 and mounted beneath the actuator (70) and above the valve body (11).

9. The valve system (10) according to claim 8, wherein the valve system further comprises a stem (13) connected to the obturator (12), and a stem packing (14) connected to the stem (13), and further wherein the stem packing (14) is accessible and removable via a front side opening (48a) of the bracket (40) and a rear side opening (48a) of the bracket (40).

10. The valve system (10) according to claim 8, wherein the wall comprises a first lateral side wall (47) and a second lateral side wall (47), each lateral side wall (47) defines an exterior wall surface (47b) and an interior wall surface (47a).

11. The valve system (10) according to claim 10, further comprising a recess (43) defined on the first lateral side wall (47), wherein the recess (43) has a reduced wall thickness (40a) or further comprising a pattern of openings (80) defined through the first lateral side wall (47), wherein the pattern of openings (80) are configured to increase a strain response of the strain gauge (50).

**Patentansprüche**

1. Klammer (40) für ein Ventilsystem (10), die Folgendes aufweist:

eine Aktuatorseite (41) der Klammer (40), die einen ersten Satz (44) eines oder mehrerer Löcher definiert;
eine Ventilseite (42) der Klammer (40), wobei sich die Ventilseite (42) gegenüberliegend der Aktuatorseite (41) befindet und wobei ferner die Ventilseite (42) einen zweiten Satz (49) eines oder mehrerer Löcher definiert;
eine Wand (47), die die Aktuatorseite (41) und die Ventilseite (42) verbindet;
einen ersten und einen zweiten Dehnungsmessstreifen (50), der an der Wand (47) montiert ist, wobei die Dehnungsmessstreifen (50) dazu ausgelegt sind, einen Drehmoment zwischen der Aktuatorseite (41) und der Ventilseite (42) zu bestimmen;
die Wand (47) weist eine Außenwandfläche (47b) und eine Innenwandfläche (47a) auf, **dadurch gekennzeichnet, dass** der erste Dehnungsmessstreifen (50) an der Außenwandfläche (47b) montiert ist und der zweite Dehnungsmessstreifen (50) an der Innenwandfläche (47a) montiert ist.

2. Klammer (40) nach Anspruch 1, wobei die Wand (47) ferner eine Vertiefung (43) mit einer reduzierten Dicke (40a) relativ zu einem nicht vertieften Abschnitt (43a) der Wand (47) aufweist; und wobei der Dehnungsmessstreifen (50) ferner auf der Vertiefung (43) der Wand (47) montiert ist.

3. Klammer (40) nach Anspruch 1, die ferner ein Muster von Öffnungen (80), die durch die Wand (47) definiert sind, aufweist, wobei das Muster von Öffnungen (80) dazu ausgelegt ist, eine Dehnungsreaktion des Dehnungsmessstreifens (50) zu erhöhen.

4. Klammer (40) nach Anspruch 1, die ferner ein Steuerkastengehäuse (51), das den Dehnungsmessstreifen (50) einhaust, aufweist, wobei das Steuerkastengehäuse (51) gegen Wasser- und Staubeintritt schützt.

5. Klammer (40) nach Anspruch 1, wobei die Klammer (40) eine Vorderseitenöffnung (48a) und eine Rückseitenöffnung (48a) definiert, wobei sowohl die Vorderseitenöffnung (48a) und die Rückseitenöffnung (48a) Zugriff zu einem Innenbereich der Klammer (40) bieten.

6. Klammer (40) nach Anspruch 1, wobei der Dehnungsmessstreifen (50) an einer Dehnungsmessstreifen-Anschlussplatte (52) angeschlossen ist.

7. Klammer (40) nach Anspruch 1, wobei es sich bei der Klammer (40) um eine C-förmige Klammer handelt bzw. wobei es sich bei der Klammer (40) um eine rohrförmige Klammer handelt.

8. Ventilsystem (10) zum Überwachen von Drehmoment, das Folgendes aufweist:

einen Ventilkörper (11), der ein Verschlusselement (12) des Ventilkörpers (11) einhaust; einen Aktuator (70), der dazu ausgelegt ist, das Verschlusselement (12) für den Ventilkörper (11) zu betätigen; eine Klammer (40) nach einem der Ansprüche 1 bis 7, die unterhalb des Aktuators (70) und über dem Ventilkörper (11) montiert ist.

9. Ventilsystem (10) nach Anspruch 8, wobei das Ventilsystem ferner einen Schaft (13), der mit dem Verschlusselement (12) verbunden ist, und eine Schaftdichtung (14), die mit dem Schaft (13) verbunden ist, aufweist und wobei die Schaftdichtung (14) ferner über eine Vorderseitenöffnung (48a) der Klammer (40) und eine Rückseitenöffnung (48a) der Klammer (40) zugänglich ist.

10. Ventilsystem (10) nach Anspruch 8, wobei die Wand eine erste laterale Seitenwand (47) und eine zweite laterale Seitenwand (47) aufweist, wobei jede laterale Seitenwand (47) eine Außenwandfläche (47b) und eine Innenwandfläche (47a) definiert.

11. Ventilsystem (10) nach Anspruch 10, das ferner eine Vertiefung (43), die in der ersten lateralen Seitenwand (47) definiert ist, wobei die Vertiefung (43) eine reduzierte Wanddicke (40a) aufweist, aufweist oder ferner ein Muster von Öffnungen (80), die durch die erste laterale Seitenwand (47) definiert sind, wobei das Muster von Öffnungen (80) dazu ausgelegt ist, eine Dehnungsreaktion des Dehnungsmessstreifens (50) zu erhöhen, aufweist.

**Revendications**

1. Support (40) pour système de soupape (10) comprenant

un côté actionneur (41) du support (40), définissant un premier ensemble (44) d'un ou plusieurs trous ; un côté soupape (42) du support (40), le côté soupape (42) étant opposé au côté actionneur (41), et le côté soupape (42) définissant en outre un second ensemble (49) d'un ou plusieurs trous ; une paroi (47) reliant le côté actionneur (41) et le côté soupape (42) ; une première et une seconde jauge de contrainte (50) montées sur la paroi (47), les jauges de contrainte (50) étant configurées pour déterminer un couple entre le côté actionneur (41) et le côté soupape (42), la paroi (47) comprenant une surface de paroi extérieure (47b) et une surface de paroi intérieure (47a), **caractérisé en ce que** la première jauge de contrainte (50) est montée sur la surface de paroi extérieure (47b) et la seconde jauge de contrainte (50) est montée sur la surface de paroi intérieure (47a).

2. Support (40) selon la revendication 1, dans lequel la paroi (47) définit en outre un évidement (43) ayant une épaisseur réduite (40a) par rapport à une partie non évidée (43a) de la paroi (47) ; et dans lequel la jauge de contrainte (50) est en outre montée sur l'évidement (43) de la paroi (47).

3. Support (40) selon la revendication 1, comprenant en outre un motif d'ouvertures (80) définies à travers la paroi (47), le motif d'ouvertures (80) étant configuré pour augmenter une réponse de contrainte de la jauge de contrainte (50).

4. Support (40) selon la revendication 1, comprenant en outre une enceinte de boîtier de commande (51) logeant la jauge de contrainte (50), l'enceinte de boîtier de commande (51) protégeant contre la pénétration d'eau et de poussière.

**5.** Support (40) selon la revendication 1, le support (40) définissant une ouverture latérale avant (48a) et une ouverture latérale arrière (48a), à la fois l'ouverture latérale avant (48a) et l'ouverture latérale arrière (48a) permettant d'accéder à une zone intérieure du support (40).

**6.** Support (40) selon la revendication 1, dans lequel la jauge de contrainte (50) est connectée à une carte de connexion de jauge de contrainte (52).

**7.** Support (40) selon la revendication 1, le support (40) étant un support en forme de C ou le support (40) étant un support en forme de tube.

**8.** Système de soupape (10) pour surveiller un couple, comprenant

    un corps de soupape (11) logeant un obturateur (12) du corps de soupape (11) ;
    un actionneur (70) configuré pour actionner l'obturateur (12) du corps de soupape (11) ;
    un support (40) selon l'une quelconque des revendications 1 à 7 et monté sous l'actionneur (70) et au-dessus du corps de soupape (11).

**9.** Système de soupape (10) selon la revendication 8, le système de soupape comprenant en outre une tige (13) reliée à l'obturateur (12), et une garniture de tige (14) reliée à la tige (13), et la garniture de tige (14) étant en outre accessible et amovible via une ouverture latérale avant (48a) du support (40) et une ouverture latérale arrière (48a) du support (40).

**10.** Système de soupape (10) selon la revendication 8, dans lequel la paroi comprend une première paroi latérale (47) et une seconde paroi latérale (47), chaque paroi latérale (47) définissant une surface de paroi extérieure (47b) et une surface de paroi intérieure (47a).

**11.** Système de soupape (10) selon la revendication 10, comprenant en outre un évidement (43) défini sur la première paroi latérale (47), l'évidement (43) ayant une épaisseur de paroi réduite (40a) ou comprenant en outre un motif d'ouvertures (80) défini à travers la première paroi latérale (47), le motif d'ouvertures (80) étant configuré pour augmenter une réponse de contrainte de la jauge de contrainte (50).

*FIG. 1*

FIG. 2

40

41

47

47a

48a

43a

50

47

43

53

47b

48b

42

FIG. 3

*FIG. 4*

FIG. 5

**FIG. 6**

**FIG. 7**

*FIG. 8*

*FIG. 9*

*FIG. 10*

40

41     50     46

47

42

*FIG. 11*

40     41

24     47

48a

42

*FIG. 12*

*FIG. 13*

*FIG. 14*

*FIG. 15*

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5743133 A
- GB 2274714 A
- US 20170016749 A1